# EUROPEAN PATENT SPECIFICATION

(11) **EP 2 015 413 B1**
(45) Date of publication and mention of the grant of the patent: **31.08.2016**
(21) Application number: 08011915.9
(22) Date of filing: 02.07.2008
(51) Int. Cl.: H02B 11/127, H01H 71/08

(54) **Draw in-out apparatus for air circuit breaker**
Einzugs- und Ausgabevorrichtung für einen Luftschalter
Appareil d'entrée/sortie pour disjoncteur à air

(30) Priority: 12.07.2007 KR 20070070274
(43) Date of publication of application: 14.01.2009
(73) Proprietor: LS Industrial Systems Co., Ltd, Dongan-Gu Anyang, Gyeonggi-Do (KR)
(72) Inventor: Kim, Hyun-Jae, Chungcheongbuk-Do (KR); Na, Ki-Chul, Chungcheongbuk-Do (KR); Kim, Myoung-Soo, Chungcheongbuk-Do (KR); Lyu, Jae-Goo, Chungcheongbuk-Do (KR)
(74) Representative: Lang, Johannes

(56) References cited:
- CN-Y- 2 550 940
- FR-A1- 2 782 579
- US-A- 2 776 346
- US-A- 4 743 715
- Dr. Ing. Horst Czichos: "HÜTTE - Die Grundlagen der Ingenieurwissenschaften, 31.Auflage," 31 December 2000 (2000-12-31), Springer-Verlag , Berlin , XP002590156 ISBN: 3-540-66882-9 , page K44 * the whole document *

## Description

### BACKGROUND OF THE INVENTION

### 1. Field of the Invention

The present invention relates to an air circuit breaker, more particularly, to, in an air circuit breaker, a draw in-out apparatus for an air circuit breaker which is capable of stably enduring a load of a main body when performing a draw-in operation and a reaction force generated when an electric terminal of the main body and an electric terminal of a cradle are connected to each other.

### 2. Description of the Related Art

An air circuit breaker refers to an industrial circuit breaker for switching a circuit for a low voltage comparing with a vacuum circuit breaker for switching a circuit for a high voltage. The air circuit breaker mainly includes a main body and a cradle. Here, the main body includes a switching mechanism, contactors, an arc extinguishing mechanism and an electric terminal to be electrically connected with the cradle. The main body may be moved to a position for being electrically connected to the cradle and a position for being electrically disconnected from the cradle, by a draw in-out apparatus for an air circuit breaker to be described hereafter.

The cradle serves to as an enclosure supporting the main body and as a means for electrically connecting the main body and external power source and load to each other. In order to electrically connect the main body and the external power source and load to each other, the cradle is provided with an external terminal outwardly protruded to be electrically connected to the external power source and load and an inner terminal to be connected to the electric terminal of the main body.

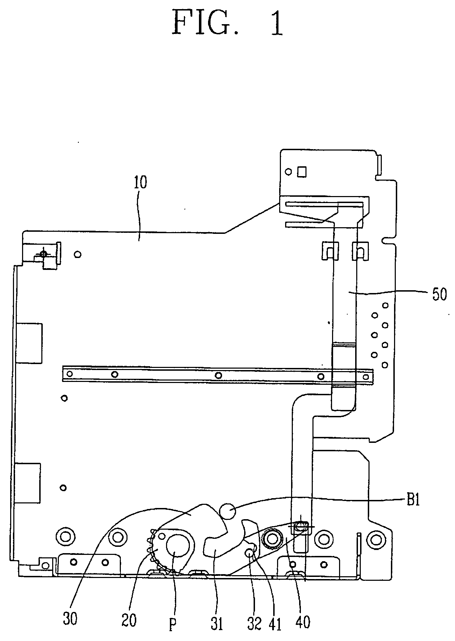

One example of a draw in-out apparatus for an air circuit breaker in the related art which is capable of moving the main body to be electrically connected to or disconnected from the cradle in the air circuit breaker will be described with reference to FIGS. 1 to 3.

In FIG. 1, a reference numeral 10 designates a cradle, particularly, one of two side plates installed to be upright at both sides of the cradle.

The draw in-out apparatus for the air circuit breaker in the related art, as shown in FIG. 1, includes a cam 30, a pinion gear 20 and a protruding portion B1.

The cam 30 is installed at the cradle 10 so as to be supported and rotatable centering on a pivot P. The cam 30 is provided with a cam slot portion 31 as a driving slot portion for fitting the protruding portion B1 thereinto and transferring a force that allows the protruding portion B1 to horizontally move.

The pinion gear 20 is installed at the pivot P so as to be coaxial with the cam 30.

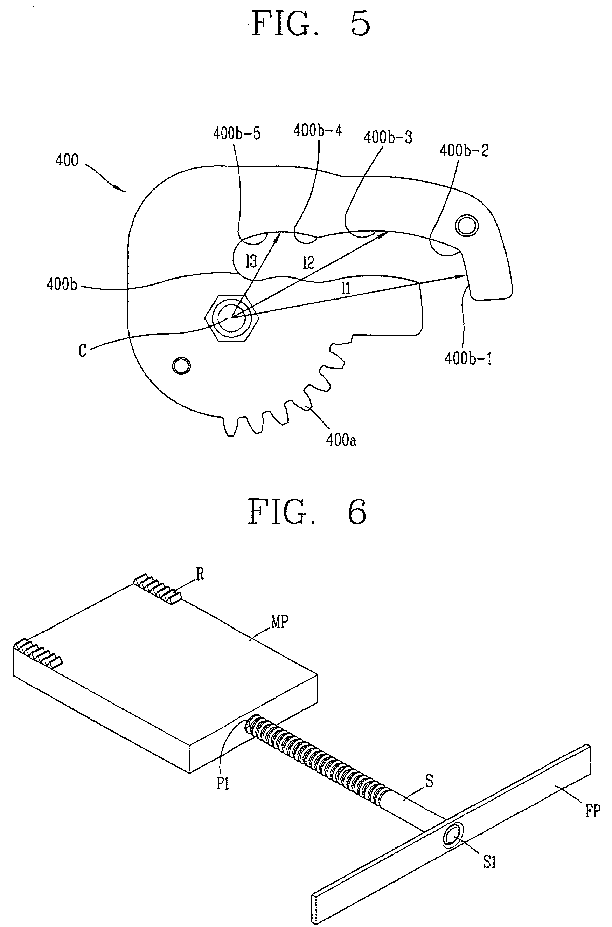

Though it is not shown in the drawing, the draw in-out apparatus for the air circuit breaker in the related art may further include a movable plate MP provided with rack gears R on an upper portion thereof as shown in FIG. 6. The pinion gear 20 can be rotated by the movable plate MP moving back and forth with being meshed with the rack gears R of the movable plate MP.

The protruding portion B1 is protruded directly from a side surface of the main body or protruded from a plate-shaped rail supporting the main body and movable back and forth together with the main body thus to transfer a driving force which allows the main body to be moved to a connected position, a disconnected position or a test position.

In FIG. 1, unexplained reference numerals 32, 40 and 50 are not directly related to the draw in-out apparatus of the present invention. They serve to automatically connecting a power source terminal and a signal terminal on the cradle 10 and a power source terminal and a signal terminal on the main body to each other at the test position or the connected position, and automatically disconnecting them from each other at the disconnected position.

Regarding unexplained reference numerals, a reference numeral 32 designates a driving force transfer protrusion protruded from one side of the cam 30, and a reference numeral 40 designates a lever installed at the cradle 10 so as to be rotatable to a position for receiving a rotational driving force by being connected to the driving force transfer protrusion 32 and to a position for being separated from the rotational driving force by being disconnected from the driving force transfer protrusion 32. Additionally, a reference numeral 50 designates a rod connected to the lever 40 and guided by a guiding member (reference numeral not given) thus to be movable in a vertical direction. And, a reference numeral 41 designates a connection recess portion provided at the lever 40 and connected to the driving force transfer protrusion 32.

Meanwhile, with the abovementioned configuration, an operation of the draw in-out apparatus for an air circuit breaker in the related art will be described with reference to FIGS. 1 to 3.

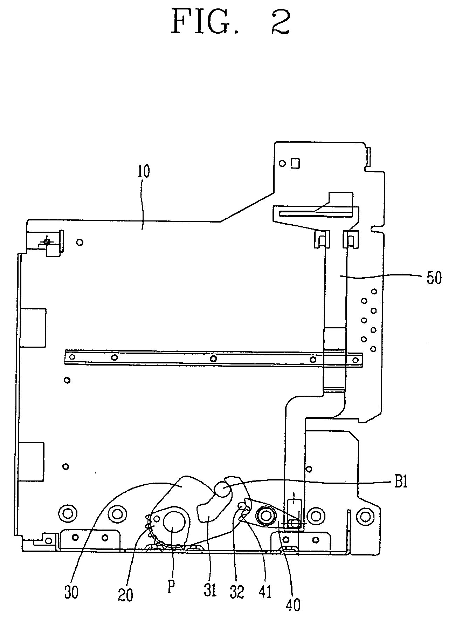

First, a movement of the main body from the disconnected position shown in FIG. 1 to the test position shown in FIG. 2 will be described.

In a state shown in FIG. 1, when a handle (not shown) is connected to a front handle connection portion S1 of a spindle S shown in FIG. 6 and then the spindle S is rotated in a clockwise direction (here, it is assumed that the movable plate MP is positioned at a left side of the pivot P in FIG. 1), the movable plate MP moves rightward in FIG. 1 and then the rack gears R thereon rotate the pinion gear 20 in a counter-clockwise direction shown in FIG. 2. Accordingly, the cam 30 installed to be coaxial with the pinion gear 20 is also rotated in the counter-clockwise direction to be in a state shown in FIG. 2. Here, the lever 40 connected to the driving force transfer protrusion 32 of the cam 30 is rotated in the clockwise direction, and accordingly the rod 50 is moved down, thereby connecting the power source terminal and the signal terminal (not shown) of the cradle and the power source terminal and the signal terminal of the main body to each other thus to be positioned at the test position. In this test position, since the protruding portion B1 is positioned at an inlet of the cam slot portion 31 of the cam 30 without contacting with the cam 30, the main body does not move. Accordingly, the electric terminal (not shown) of the main body and the corresponding electric terminal of the cradle 10 remain disconnected from each other in the same state shown in FIG. 1.

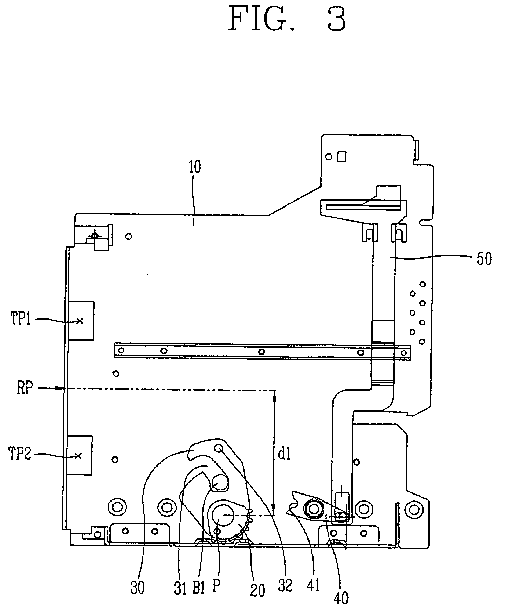

And, a movement of the main body from the test position shown in FIG. 2 to the connected position shown in FIG. 3 will be described.

In a state shown in FIG. 2, when the handle (not shown) is connected to the front handle connection portion S1 of the spindle S shown in FIG. 6 and then the spindle S is further rotated in the clockwise direction, the movable plate MP moves rightward in FIG. 2 and then the rack gears R thereon further rotate the pinion gear 20 in the counter-clockwise direction as shown in FIG. 3. Accordingly, the cam 30 installed to be coaxial with the pinion gear 20 is also further rotated in the counter-clockwise direction as shown in FIG. 3. Here, the protruding portion B1 is moved in the horizontal direction, leftward on the drawing, by a pushing force of the cam slot portion 31 of the cam 30. Accordingly, the electric terminal of the main body (not shown) and the corresponding electric terminal of the cradle 10 are mechanically and electrically connected to each other thus to implement the air circuit breaker in the connected state.

And, a movement of the main body from the connected position shown in FIG. 3 to the disconnected position shown in FIG. 1 will be described.

In a state shown in FIG. 3, when the handle (not shown) is connected to the front handle connection portion S1 of the spindle S shown in FIG. 6 and then the spindle S is rotated in the counter-clockwise direction, the movable plate MP moves leftward in FIG. 3 and then the rack gears R thereon rotate the pinion gear 20 in the clockwise direction as shown in FIG. 1. Accordingly, the cam 30 installed to be coaxial with the pinion gear 20 is also rotated in the clockwise direction as shown in FIG. 1. Here, the protruding portion B1 is moved in the horizontal direction, rightward on the drawing, by the pushing force of the cam slot portion 31 of the cam 30. Accordingly, the electric terminal of the main body (not shown) and the corresponding electric terminal of the cradle 10 are mechanically and electrically disconnected from each other thus to implement the air circuit breaker in the disconnected state.

In such draw in-out apparatus for the air circuit breaker in the related art, a reaction point RP of the reaction force generated when the electric terminal of the cradle 10 and the electric terminal of the main body are connected to each other is positioned at the middle of a height difference between two electric terminal positions TP1, TP2 of the cradle 10 with a two point chain line as shown in FIG. 3. However, in the draw in-out apparatus for the air circuit breaker in the related art, since a distance d1 between the reaction point RP of the reaction force and the pivot P of the cam 30 is long, as the air circuit breaker has larger capacity and size, it becomes to be more difficult for the cam 30 to endure the reaction force.

Further, as an air circuit breaker has larger capacity and size, a load of the main body is also increased. With respect to this principle, since the draw in-out apparatus for the air circuit breaker in accordance with the related art is provided with the pivot P of the cam 30 positioned at a lower side therein, it may be difficult that the cam 30 endures the load of the main body and generates a driving force enough to move the main body.

Further, since the draw in-out apparatus for the air circuit breaker in accordance with the related art should endure the load of the main body and the reaction force by a rotation torque of a small pinion gear, the draw in-out apparatus having this structure cannot be applied to an air circuit breaker having large capacity and size.

Finally, the document FR 2 782 579 A1 discloses an electrical switchgear apparatus comprising a plug-in circuit breaker and a device indicating the state of the circuit breaker. The electrical switchgear apparatus comprises a fixed frame, a circuit breaker movable in the fixed frame between a plugged-out position and a plugged-in position, a reversible plug-in and plug-out mechanism of the circuit breaker, a movable means for detecting an indexed position of the mechanism or of the circuit breaker, linked to a first electrical switch, and a movable means for detecting an indexed position (open or closed) of the main contact means of the circuit breaker linked to a second electrical switch. Each of the two switches comprises an input, a first output and a switching means able to take a first position in which it connects the input of the switch electrically to the first output of the switch, the switching means being kinematically linked to the corresponding detecting means, in such a way that the switching means is in its first position if and only if the corresponding detecting means is in its active position. The output of one of the switches is connected to the input of the other switch. A state indicating device is thus achieved with an input terminal, a first output terminal and means designed to electrically connect the input terminal and the first output terminal if and only if the main contact means and the switchgear apparatus are simultaneously in their indexed position.

### SUMMARY OF THE INVENTION

Therefore, the present invention is directed to providing a draw in-out apparatus for an air circuit breaker which is capable of effectively enduring a load of the main body and a reaction force generated when moving to a connected position and of being applied to an air circuit breaker having large capacity and size.

To achieve these and other advantages and in accordance with the purpose of the present invention, as embodied and broadly described herein, there is provided a draw in-out apparatus and an air circuit breaker, in an air circuit breaker comprising a cradle electrically connected to an electrical load and an electrical power source, and a main body that is movable to a connected position for being electrically connected to the cradle, a test position at which the main body is electrically disconnected from the cradle but a control power source is connected and a signal input/output is implemented, and a disconnected position at which the main body is electrically disconnected from the cradle, the control power source is not supplied and the signal input/output is not implemented, the draw in-out apparatus for an air circuit breaker comprising: a spindle provided with a thread portion and manually rotatable (pivotable) by being connected to a handle; a movable plate meshed with the thread portion of the spindle by a screw so as to be movable back and forth along the thread portion of the rotating spindle; rack gear installed on an upper surface of the movable plate so as to be movable back and forth along with the movable plate moving back and forth; pinion gear installed to be meshed with the rack gear and rotatable according to the rack gear moving back and forth; a cam rotatable by a rotational driving force transferred from the pinion gear by being provided with a teeth portion meshed with the pinion gear and having a radius larger than those of the pinion gear so as to amplify a torque transferred from the pinion gear and provided with a cam slot portion for enduring a load of the main body and a reaction force generated when the main body and the cradle are electrically connected to each other while the main body is moved to a connected position; a pivot disposed on the cradle at a position adjacent to the middle of a height between electric terminals of the cradle and thus rotatably supporting the cam so as for the cam to effectively endure the load of the main body and the reaction force generated when the main body and the cradle are electrically connected to each other; and a driving protruding portion protrudingly extended from the main body or a means for supporting the main body with moving together with the main body and connected to the cam thus to transfer a driving force from the cam to the main body.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate preferred embodiments of the invention and together with the description serve to explain the principles of the invention.

In the drawings:
FIG. 1 is a side view showing one side plate of a cradle without a main body, which shows a configuration of a draw in-out apparatus for an air circuit breaker in the related art and a state of the draw in-out apparatus at a disconnected position;
FIG. 2 is a state view showing the draw in-out apparatus for an air circuit breaker in the related art at a test position;
FIG. 3 is a state view showing the draw in-out apparatus for an air circuit breaker in the related art at a connected position;
FIG. 4 is an upper perspective view showing a state that a main body is drawn out from a cradle, which shows an outer configuration of an air circuit breaker in accordance with the present invention;
FIG. 5 is an enlarge front view showing a cam of the draw in-out apparatus for an air circuit breaker in accordance with the present invention;
FIG. 6 is a perspective view showing a spindle, a movable plate and rack gear of the draw in-out apparatus for an air circuit breaker in accordance with the present invention;
FIG. 7 is a side view showing one side plate of a cradle without a main body, which shows a configuration of the draw in-out apparatus for an air circuit breaker in accordance with the present invention and a state of the draw in-out apparatus at a disconnected position;
FIG. 8 is a state view showing the draw in-out apparatus for an air circuit breaker in accordance with the present invention at a test position;
FIG. 9 is a state view showing the draw in-out apparatus for an air circuit breaker in accordance with the present invention at a connected position;
FIG. 10 is an upper view showing a state that an electric terminal of the main body and an electric terminal of the cradle are connected to each other in the draw in-out apparatus for an air circuit breaker in accordance with the present invention; and
FIG. 11 is an upper view showing a state that an electric terminal of the main body and an electric terminal of the cradle are disconnected from each other in the draw in-out apparatus for an air circuit breaker in accordance with the present invention.

### DETAILED DESCRIPTION OF THE INVENTION

Description will now be given in detail of the preferred embodiments of the present invention, examples of which are illustrated in the accompanying drawings.

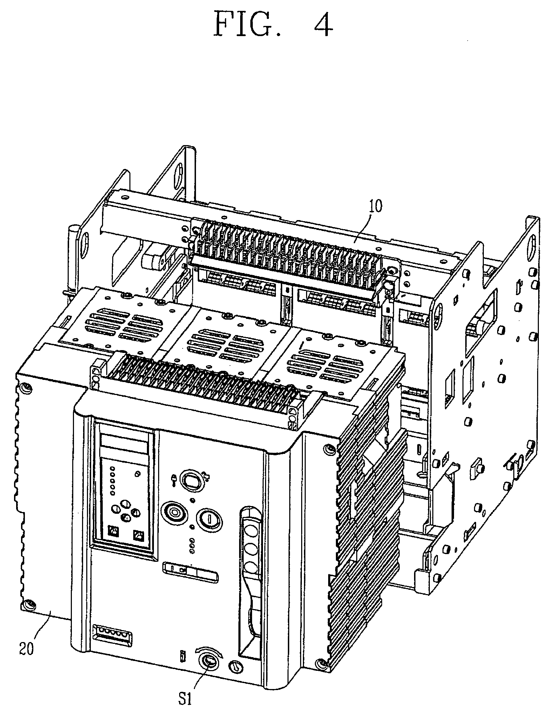

As shown in FIG. 4, an air circuit breaker in accordance with the present invention includes a main body 20 and a cradle 10. A reference character S1 referring a front lower portion of the main body 20 designates a handle connection portion of a spindle S, which is shown in FIG. 6 in detail.

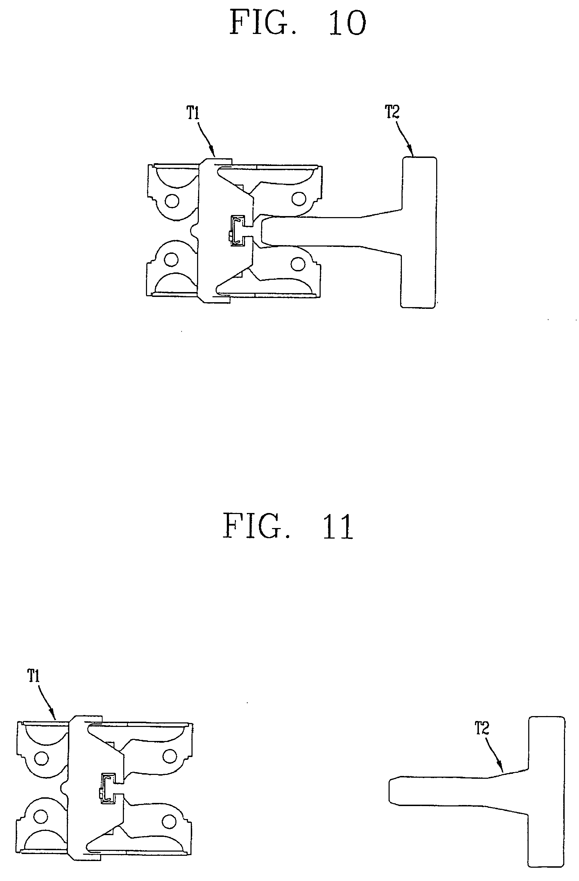

As well-known and described above, the main body 20 includes a switching mechanism (not shown), contactors, an arc extinguishing mechanism, an electric terminal (refer to a reference character T2 in FIGS. 10 and 11) for being electrically connected to the cradle 10. The main body 20 is movable to a connected position for being electrically connected to the cradle 10, a test position at which the main body 20 is electrically disconnected from the cradle 10 but a control power source (i.e., an electrical power source for a control unit) is connected and a signal input/output can be implemented, and a disconnected position at which the main body 20 is electrically disconnected from the cradle 10, the control power source is not supplied and the signal input/output is not implemented.

The cradle 10 serves as an enclosure supporting the main body 20 and as a means for electrically connecting the main body 20 and the external electrical circuit (in other words the external electrical power source and the external electrical load) to each other. Thus, the cradle 10 includes an external terminal (refer to a left portion of T1 in FIGS. 10 and 11) outwardly protruded to be electrically connected to the external power source and load and an internal terminal (refer to a right portion of T1 in FIGS. 10 and 11) to be connected to the electric terminal of the main body 20.

Meanwhile, referring to FIGS. 5 to 7, a configuration of the draw in-out apparatus for the air circuit breaker in accordance with one embodiment of the present invention will be described.

The draw in-out apparatus for the air circuit breaker in accordance with the present invention includes the spindle S, a movable plate MP and rack gears R as shown in FIG. 6. In FIG. 6, the spindle S can be manually rotated by connecting the handle and provided with a thread portion.

The movable plate MP is meshed with the thread portion of the spindle S by a screw and movable back and forth along the thread portion of the rotating spindle S. A reference character P1 in FIG. 6 designates a screw hole penetratingly formed along a middle portion of the movable plate MP in a length direction so as to be meshed with the thread portion of the spindle S by the screw.

The rack gears R are installed on an upper surface of the movable plate MP and movable back and forth along with the moving plate MP moving back and forth. The rack gears may be entirely or partially formed on the upper surface of the movable plate MP.

And, the draw in-out apparatus for the air circuit breaker in accordance with the present invention further includes pinion gears 300a, 300b, a cam 400, a pivot (refer to a reference character C in FIG. 5) and a driving protruding portion B1.

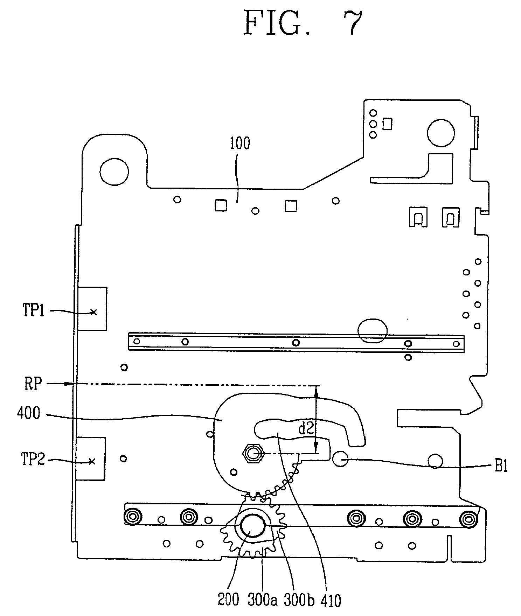

The pinion gears 300a, 300b are installed to be meshable with the rack gears R and rotatable by the rack gears moving back and forth. As shown in FIG. 7, the pinion gears 300a, 300b are installed on one common rotation shaft 200 and includes a first pinion gear 300a meshed with the rack gears R and a second pinion gear 300b meshed with teeth portions (refer to 400a in FIG. 5) of the cam 400.

The cam 400 is meshed with the second pinion gear 300b and provided with the teeth portion having a radius larger than that of the second pinion gear 300b so as to amplify a torque transferred from the second pinion gear 300b. The cam 400 is rotatable by a rotational driving force transferred from the second pinion gear 300b. The cam 400 provides a driving force allowing the main body to be displaced. And, the cam 400 is provided with a cam slot portion 410 for enduring a load of the main body and a reaction force generated when the main body and the cradle are electrically connected to each other.

With reference to FIG. 5, the cam slot portion 410 of the cam 400 includes a plurality of cam surfaces 400b-1, 400b-3, 400b-5 in which each length of moment arms 11, 12, 13 from the pivot C of the cam 400 is gradually shortened from an opened inlet portion of the cam slot portion toward a closed inner end portion 400b so as to generate the torque for offsetting the load of the main body and the reaction force generated when the main body and the cradle are electrically connected to each other. Here, each length of the moment arms I1, I2, I3 can be indicated as I1>I2>I3 since I1 is the longest, I2 is the middle and I3 is the shortest of the moment arms I1, 12, 13. In FIG. 5, unexplained reference numerals 400b-2, 400b-4 designate inflection points. The cam slot portion 410 of the cam 400 includes a first cam surface 400b-1 positioned at the opened inlet portion of the cam slot portion 410 and having the longest moment arm I1 from the pivot C of the cam 400. Further, the cam slot portion 410 of the cam 400 includes a second cam surface 400b-5 adjacent to the closed inner end portion 400b of the cam slot portion 410 and having the shortest moment arm I3 from the pivot C of the cam 400. Further, the cam slot portion 410 of the cam 400 includes a third cam surface 400b-3 interconnecting between the first cam surface 400b-1 and the second cam surface 400b-5 and having the moment arm I3 shorter than the moment arm I1 of the first cam surface 400b-1 and longer than the moment arm I3 of the second cam surface 400b-5. In order to decrease an angular acceleration of the cam surfaces 400b-3, 400b-5 when the cam 400 is rotated, an angle between the second cam surface 400b-5 and the third cam surface 400b-3 is substantially 0° or 180°. Thus, while the cam 400 is rotated, when the driving protruding portion (refer to B1 in FIG. 7) protrudingly extended from the main body or the a means for supporting the main body with moving together with the main body receives a pushing force from the second cam surface 400b-5 firstly and then from the third cam surface 400b-3 or the driving protruding portion B1 receives the pushing force from the third cam surface 400b-3 firstly and then from the second cam surface 400b-5, it is hardly accelerated. Rather, when receiving the pushing force from the third cam surface 400b-3 firstly and then from the second cam surface 400b-5, the driving protruding portion (refer to B1 in FIG. 7) is decelerated. That's because a radius of curvature of the third cam surface 400b-3 is larger than that of the second cam surface 400b-5. While, an angle between the first cam surface 400b-1 and the third cam surface 400b-3 is approximately 120°. Thus, the driving protruding portion (refer to B1 in FIG. 7) is accelerated when receiving the pushing force from the first cam surface 400b-1 firstly and then from the third cam surface 400b-3 or the driving protruding portion B1 receives the pushing force from the third cam surface 400b-3 firstly and then from the first cam surface 400b-1.

Referring to FIGS. 5 and 7, in order to allow the cam 400 to effectively enduring the load of the main body and the reaction force generated when the main body and the cradle are electrically connected to each other, the pivot C is disposed on the cradle at a position adjacent to the middle of a height between the electric terminals TP1, TP2 of the cradle, thus to rotatably support the cam. More particularly, as shown in FIG. 7, a reaction point RP is applied to the middle of the height between the electric terminals TP1, TP2 of the cradle and indicated as a virtual line, i.e., a two point chain line. The reaction point RP of the reaction force also serves as a center point to which the load of the main body is applied. The pivot C is distant from the virtual line by a distance d2. However, a distance d1 of the related art pivot P of the cam 30 spaced from the two point chain line indicating the reaction point RP of the reaction force as the middle position between the electric terminals TP1, TP2 of the cradle shown in FIG. 3 is much shorter than the distance d2 of the pivot C in the draw in-out apparatus of the present invention spaced from the two point chain line indicating the reaction point RP of the reaction force. This can be represented as a formula d1>d2. Since the position of the pivot C of the cam 400 in the draw in-out apparatus of the present invention is more adjacent to the reaction point RP of the reaction force and the center point of the load of the main body, comparing with the related art, it is capable of effectively enduring the load of the main body and the reaction force generated when the electric terminal of the main body and the electric terminal of the cradle are connected to each other, accordingly it is capable of effectively allowing the air circuit breaker to have a high capacity and a large size.

The driving protruding portion B1 is protrudingly extended from the main body or from the means supporting the main body with moving together with the main body, for example, a plate-shaped rail member (not shown) attached to both side surfaces of the main body. The driving protruding portion B1 is connected to the cam 400, more particularly, fitted into the cam slot portion 410 of the cam 400, thus to transfer the driving force from the rotating cam 400 to the main body so as to move the main body.

In FIG. 7, an unexplained reference numeral 100 designates both side plates fixedly installed at both side surfaces of the cradle 10.

Meanwhile, the configuration of the air circuit breaker in accordance with the present invention will be described with reference to FIGS. 4, 10 and 11.

The air circuit breaker in accordance with the present invention includes the cradle 10 and the main body 20 as shown in FIG. 4, in addition to the configuration of the draw in-out apparatus in accordance with the present invention. The configuration of the draw in-out apparatus in accordance with the present invention is described above, thus the description will be omitted.

The cradle 10 can be electrically connected to the load or power source of the circuit. And, the cradle 10 movably supports the main body 20. The electric terminal of the cradle 10 is indicated as a reference character T1 in FIGS. 10 to 11. As shown in FIGS. 10 to 11, the electric terminal is configured to include right and left electric connection terminals, and a left connection terminal therebetween is electrically connected to the load or power source of the circuit.

The main body 20 is movable to a connected position for being electrically connected to the cradle 10 and a disconnected position for being electrically disconnected from the cradle 10. Even though it is not shown in FIG. 4, the main body 20 is provided with a portion indicated as a reference character T2 as an electric terminal as shown in FIGS. 10 and 11 for being electrically connected to or disconnected from the cradle 10.

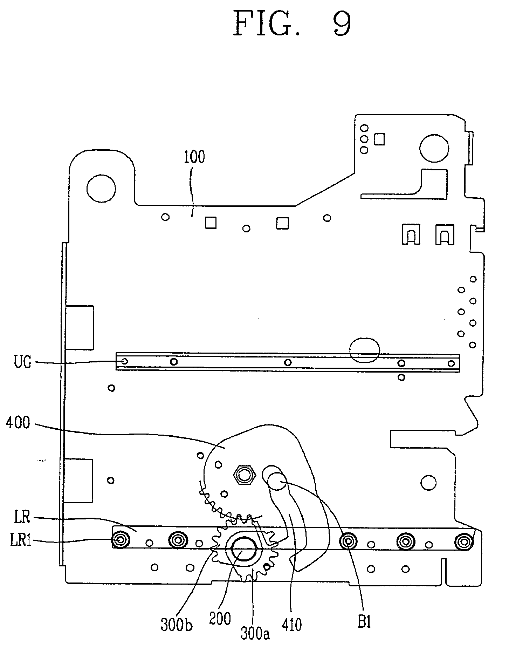

Meanwhile, as shown in FIG. 9, in the air circuit breaker in accordance with the present invention, the side plate 100 of the cradle is provided with an upper guiding rail UG and a lower guiding rail LR for guiding a horizontal movement of the main body 20. And, a plurality of guiding roller LR1 are rotatably installed at the lower guiding rail LR.

Meanwhile, with reference to FIGS. 7 to 9, operation of the draw in-out apparatus for the air circuit breaker in accordance with the present invention will be described hereafter.

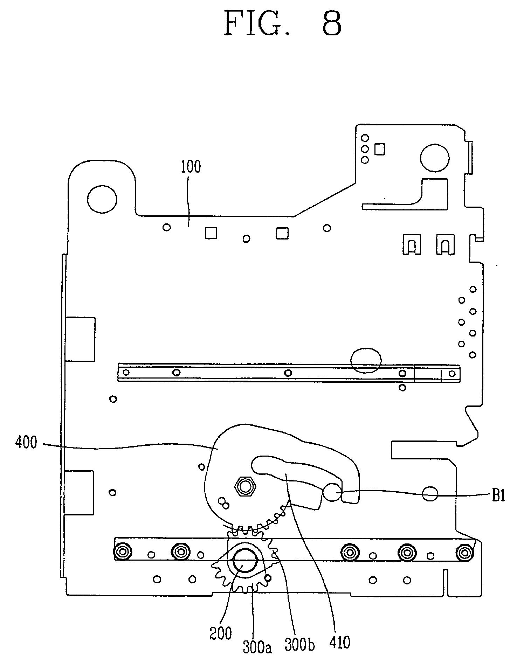

FIG. 7 is a side view showing one side plate of the cradle without the main body, which shows a configuration of the draw in-out apparatus for the air circuit breaker and a state of the draw in-out apparatus at the disconnected position. FIG. 8 is state view showing the draw in-out apparatus for the air circuit breaker at the test position in accordance with the present invention. And, FIG. 9 is a state view showing the draw in-out apparatus for the air circuit breaker at the connected position in accordance with the present invention.

First, a movement of the main body from the disconnected position shown in FIG. 7 to the test position shown in FIG. 8 will be described.

As shown in FIGS. 4 and 6, in the air circuit breaker in accordance with the present invention, when the handle (not shown) is inserted into the handle connection hole S1 provided at the middle portion of the front manipulation panel (refer to FP in FIG. 6) in the length direction and then the spindle S is rotated in the clockwise direction, the movable plate MP shown in FIG. 6 is moved to a front side of the air circuit breaker, that is toward the front manipulation panel FP in FIG. 6 (rightward in FIG. 7) along the a thread portion of the spindle S.

Accordingly, the rack gears R installed on the movable plate MP are meshed with the first pinion gear 300a thus to rotate the first pinion gear 300a in the counter-clockwise direction. Accordingly, the rotation shaft 200 is rotated in the counter-clockwise direction, and then the second pinion gear 300b coaxially connected to the rotation shaft 200 is also rotated in the counter-clockwise direction.

Accordingly, the cam 400 having the teeth portion (refer to 400a in FIG. 5) meshed with the second pinion gear 300b is rotated in the clockwise direction from the state shown in FIG. 7 and then positioned as shown in FIG. 8. Since the radius of the teeth portion of the cam 400 is greater than those of the pinion gears 300a, 300b, the cam 400 generates a torque amplified more than the torque of the second pinion gear 300b. The protruding portion B1 protruded from the main body or the supporting member movable with the main body with supporting it is positioned at the inlet of the slot portion 410 of the cam 400. Thus, the draw in-out apparatus and an air circuit breaker complete the operation from the disconnected position to the test position.

Here, by a driving force transferring mechanism (not shown) connected so as to be interworked with the cam 400, connectors respectively provided at the cradle 10 and the main body 20 for the power source and the signal input/output for a control unit (not shown) of the air circuit breaker are connected so as to be interworked with the rotating cam 400. Here, even though the electric connection to the external load and power source is disconnected, the power source and the signal input/output can be implemented through the connectors. Accordingly, it is capable of testing whether or not the air circuit breaker is normally operated.

Next, referring to main FIGS. 8 and 9 and sub FIGS. 5, 6, 10 and 11, the movement of the main body from the test position to the connected position will be described.

When the handle (not shown) is inserted into the handle connection hole S1 provided at the middle portion of the front manipulation panel (refer to FP in FIG. 6) in FIG. 4 in the length direction from the state shown in FIG. 8 and the spindle S is further rotated in the clockwise direction, the movable plate MP shown in FIG. 6 is further moved to the front side of the air circuit breaker, that is, toward the front manipulation panel FP in FIG. 6 (rightward in FIG. 8) along the thread portion of the spindle S.

The first pinion gear 300a meshed with the rack gears R installed on the movable plate MP at the test position is further rotated in the counter-clockwise direction. Accordingly, the rotation shaft 200 is further rotated in the counter-clockwise direction, and the second pinion gear 30b coaxially connected to the rotation shaft 200 is also further rotated in the counter-clockwise direction.

Accordingly, the cam 400 having the teeth portion meshed with the second pinion gear 300b is further rotated in the clockwise direction from the state shown in FIG. 6. Here, since the radius of the teeth portion of the cam 400 is greater than those of the pinion gears 300a, 300b, the cam 400 generates the torque amplified more than the torque of the second pinion gear 300b. Thus, the cam 400 can provide a driving force allowing the main body having large capacity and size to be easily moved in the horizontal direction. And, here, the protruding portion B1 positioned at the inlet of the slot portion 410 of the cam 400 at the test position is pressed by the slot portion 410 due to the rotation of the cam 400 in the clockwise direction and then horizontally moved along a cam profile of the slot portion 410 thus to be positioned at a rear side of the cradle, i.e., a left side on the drawing, as shown in FIG. 9. As shown in FIG. 5, the main body pressed by the protruding portion B1 is smoothly and rapidly moved in the horizontal direction toward the connected position by contacting with the first cam surface 400b-1 and the third cam surface 400b-3 extended from the first cam surface 400b-1 by an angle larger than 90°and smaller than 180°, for example, 120° through an inflection point 400b-2 and having a pre-determined radius of curvature, by the cam 400 rotating in the clockwise direction. Thus, the movement of the main body to the connected position at which the electric terminal T2 of the main body and the electric terminal T1 of the cradle are electrically and mechanically connected to each other is completed, as shown in FIG. 10. And, after the reaction force generated when the electric terminal T1 of the cradle and the electric terminal T2 of the main body are connected to each other is maximized, the protruding portion B1 comes in contact with the second cam surface 400b-5 having an angle difference of 0° or 180° from the third cam surface 400b-3, that is, comes in contact with an extended surface nearly without an angle variation, accordingly, the angular acceleration and a moment of inertia according to the rotation cam 400 are decreased. Resulting from the movement of the main body from the test position to the connected position, the electric terminal T2 of the main body is electrically and mechanically connected to the corresponding electric terminal T1. And, connectors of cradle and the main body remain connected to each other mechanically and electrically. Accordingly, the circuit between the load and the power source comes to be in the electrically connected state, and the supply of power source and the signal input/output for the control unit of the air circuit breaker can be implemented.

Meanwhile, a movement of the main body from the connected position shown in FIG. 9 to the test position shown in FIG. 8 will be described.

As shown in FIG. 6, when the handle (not shown) is inserted into the handle connection hole S1 of the air circuit breaker in accordance with the present invention and the spindle S is rotated in the counter-clockwise direction, the movable plate MP shown in FIG. 6 is moved to the rear side of the air circuit breaker, that is, in a direction to be distant from the front manipulation panel FP in fig. 6 (leftward in FIG. 9) along the thread portion of the spindle S.

The rack gears R installed on the movable plate MP moving back are also moved backwardly, accordingly the first pinion gear 300a meshed with the rack gears R is rotated in the clockwise direction. Accordingly, the rotation shaft 200 is rotated in the clockwise direction and the second pinion gear 300b coaxially connected to the rotation shaft 200 is also rotated in the clockwise direction.

Accordingly, the cam 400 having the teeth portion meshed with the second pinion gear 300b is rotated in the counter-clockwise direction from the state shown in FIG. 9 to be in the state shown in FIG. 8. Here, since the radius of the teeth portion of the cam 400 is greater than those of the pinion gears 300a, 300b, the cam 400 generates the torque amplified more than the torque of the second pinion gear 300b. Thus, the cam 400 can provide the driving force allowing the main body having the large capacity and size to be easily moved in the horizontal direction. And, here, the protruding portion B1 positioned at the second cam surface 400b-5 of the slot portion 410 of the cam 400 at the connected position is pressed by the slot portion 410 due to the rotation of the cam 400 in the counter-clockwise direction thus to be moved to the front side of the cradle in the horizontal direction, i.e., rightward on the drawing, along the cam profile of the slot portion 410 as shown in FIG. 8. Accordingly, the main body is also moved toward the front side of the cradle by the moved distance of the protruding portion B1 in the horizontal direction. Accordingly, the electric terminal T2 of the main body and the electric terminal T1 of the cradle are mechanically and electrically disconnected from each other, as shown in FIG. 11.

As a result of the movement of the main body from the connected position to the test position, the connectors of the main body and the cradle remain connected to each other and the load and power source on the circuit are electrically disconnected. Accordingly, the power source is supplied to the control unit of the air circuit breaker and the input/output for the control unit can be implemented.

Meanwhile, a movement of the main body from the test position shown in FIG. 8 to the disconnected position shown in FIG. 7 will be described.

When the handle (not shown) is inserted into the handle connection hole S1 of the air circuit breaker in accordance with the present invention and the spindle S is further rotated in the counter-clockwise direction, the movable plate MP shown in FIG. 6 is moved to the rear side of the air circuit breaker, that is in a direction to be further distant from the front manipulation panel FP in FIG. 6 (leftward in FIG. 8) along the thread portion of the spindle S.

Accordingly, the rack gears R on the movable plate MP are also moved in the direction to be further distant from the front manipulation panel FP (leftward in FIG. 8), and the first pinion gear 300a meshed with the rack gears R is further rotated from the test position in the clockwise direction on the drawing. Accordingly, the rotation shaft 200 is further rotated in the clockwise direction and the second pinion gear 300b coaxially connected to the rotation shaft 200 is also further rotated in the clockwise direction.

Accordingly, the cam 400 having the teeth portions meshed with the second pinion gear 300b is rotated in the counter-clockwise direction from the state shown in FIG. 8. Here, the protruding portion B1 is separated from the slot portion 410 of the cam 400 thus to be in the state shown in FIG. 7.

Each connector of the main body and the cradle is disconnected from each other, together with the movement of the main body from the test position to the disconnected position, the disconnecting operation is completed.

As aforementioned, in the draw in-out apparatus for the air circuit breaker in accordance with the present invention, the pivot of the cam is positioned to be adjacent to the reaction point of the reaction force. Further, in the draw in-out apparatus for the air circuit breaker in accordance with the present invention, the radius of the teeth portion of the cam is much larger than those of the pinion gears, accordingly it is capable of amplifying the rotational driving force. Further, in the draw in-out apparatus for the air circuit breaker in accordance with the present invention, the cam transfers the driving force to the main body through the cam slot portion having the plurality of cam surfaces from the cam surface having the longest moment arm to the smallest moment arm from the pivot. Accordingly, the draw in-out apparatus for the air circuit breaker is capable of effectively enduring the load of the main body and the reaction force generated when moving to the connected position, and of being applied to an air circuit breaker having large capacity and size.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present inventive features may be embodied in several forms without departing from the characteristics thereof, it should also be understood that the above-described embodiments are not limited by any of the details of the foregoing description, unless otherwise specified, but rather should be construed within its scope as defined in the appended claims.

## Claims

1. A draw in-out apparatus and an air circuit breaker, the air circuit breaker comprising a cradle (10) electrically connected to an electrical load and an electrical power source, and a main body (20) that is movable to a connected position for being electrically connected to the cradle, a test position at which the main body is electrically disconnected from the cradle but a control power source is connected and a signal input/output is implemented, and a disconnected position at which the main body is electrically disconnected from the cradle, the control power source is not supplied and the signal input/output is not implemented, the draw in-out apparatus for an air circuit breaker comprising:
a spindle (S) provided with a thread portion and manually rotatable by being connected to a handle;
a movable plate (MP) meshed with the thread portion of the spindle by a screw so as to be movable back and forth along the thread portion of the rotating spindle;
rack gear (R) installed on an upper surface of the movable plate so as to be movable back and forth along with the movable plate moving back and forth;
pinion gear (300a, 300b) installed to be meshed with the rack gear and rotatable according to the rack gears moving back and forth;
a cam (400) rotatable by a rotational driving force transferred from the pinion gears by being provided with a teeth portion meshed with the pinion gear provided with a cam slot portion (410) for enduring a load of the main body and a reaction force generated when the main body and the cradle are electrically connected to each other while the main body is moved to a connected position;
a pivot (C) disposed on the cradle rotatably supporting the cam (400); and
a driving protruding portion (B1) protrudingly extended from the main body or a means for supporting the main body with moving together with the main body and connected to the cam thus to transfer a driving force from the cam to the main body ;
wherein the pivot (C) is disposed on the cradle at a position adjacent to the middle of a height between electric terminals of the cradle and thus rotatably supporting the cam such that the cam endures the load of the main body and the reaction force generated when the main body and the cradle are electrically connected to each other;
**characterized in that**
the cam has a radius larger than those of the pinion gear so as to amplify a torque transferred from the pinion gear.

2. The apparatus of claim 1, wherein the cam slot portion of the cam comprises a plurality of cam surfaces (400b-1, 400b-3, 400b-5) in which each length of moment arms from the pivot of the cam is gradually shortened from an opened inlet portion of the cam slot portion toward a closed inner end portion so as to generate the torque for offsetting the load of the main body and the reaction force generated when the main body and the cradle are electrically connected to each other.

3. The apparatus of claim 2, wherein the cam slot portion of the cam comprises:
a first cam surface (400b-1) positioned at the opened inlet portion of the cam slot portion and having the longest moment arm from the pivot of the cam;
a second cam surface (400b-5) adjacent to the closed inner end portion of the cam slot portion and having the shortest moment arm from the pivot of the cam; and
a third cam surface (400b-3) interconnecting between the first cam surface and the second cam surface and having the moment arm shorter than the moment arm of the first cam surface and longer than the moment arm of the second cam surface.

4. The apparatus of claim 3, wherein an angle between the second cam surface and the third cam surface is substantially 0°or 180° so as to decrease an angular acceleration.

5. The apparatus of claim 1, wherein the pinion gear comprises a first pinion gear (300a) meshed with the rack gears and a second pinion gear (300b) meshed with teeth portions of the cam.

## Patentansprüche

1. Vorrichtung zum Hinein- und Herausziehen und ein Leistungsschalter, wobei der Leistungsschalter ein Gestell (10) aufweist, das elektrisch mit einer elektrischen Last und einer elektrischen Leistungsquelle verbunden ist und einen Hauptkörper (20), der zu einer verbundenen Position bewegbar ist, um elektrisch mit dem Gestell verbunden zu werden, einer Testposition, bei welcher der Hauptkörper elektrisch von dem Gestell getrennt ist, aber eine Steuerleistungsquelle verbunden ist und eine Signaleingabe/-ausgabe implementiert ist, und einer getrennten Position, bei welcher der Hauptkörper elektrisch von dem Gestell getrennt ist, die Steuerleistungsquelle nicht versorgt wird und die Signaleingabe/-ausgabe nicht implementiert ist, wobei die Vorrichtung zum Hineinziehen und Herausziehen für einen Leistungsschalter aufweist:
eine Spindel (S), bereitgestellt mit einem Gewindeteil und manuell rotierbar, indem sie mit einem Griff verbunden ist;
eine bewegliche Platte (MP), die mit dem Gewindeteil der Spindel durch eine Schraube in Eingriff gebracht ist, so dass sie entlang des Gewindeteils der rotierenden Spindel vor und zurück beweglich ist;
einen Zahntrieb (R), der auf einer oberen Oberfläche der beweglichen Platte installiert ist, um so vor und zurück mit der beweglichen Platte beweglich zu sein, wenn diese sich vor und zurück bewegt;
ein Zahnrad (300a, 300b), welches so installiert ist, dass es mit dem Zahntrieb in Eingriff gebracht werden kann und zu den Zahntrieben rotierbar ist, wenn sich diese vor und zurück bewegen;
einen Nocken (400), der durch eine Rotationsantriebskraft rotierbar ist, die von den Zahnrädern übertragen wird, indem dieser mit einem Zahnteil, der mit dem Zahnrad in Eingriff gebracht ist, bereitgestellt ist, und mit einem Nockenschlitzteil (410) bereitgestellt ist, um eine Last des Hauptkörpers und eine Reaktionskraft, die erzeugt wird, wenn der Hauptkörper und das Gestell elektrisch miteinander verbunden sind, während der Hauptkörper zu einer verbundenen Position bewegt wird, auszuhalten;
ein Drehgelenk (C), welches auf dem Gestell angeordnet ist und den Nocken (400) rotierbar stützt; und
ein antriebsvorstehendes Teil (B1), welches von dem Hauptkörper oder einem Mittel zum Stützen des Hauptkörpers vorstehend herausragt, und das sich zusammen mit dem Hauptkörper bewegt und mit dem Nocken verbunden ist, um so eine Antriebskraft von dem Nocken zu dem Hauptkörper zu übertragen;
wobei das Drehgelenk (C) auf dem Gestell bei einer Position angeordnet ist, die benachbart zu der Mitte einer Höhe zwischen elektrischen Anschlüssen des Gestells ist und somit rotierbar den Nocken stützt, so dass der Nocken die Last des Hauptkörpers und die Reaktionskraft, die erzeugt wird, wenn der Hauptkörper und das Gestell elektrisch miteinander verbunden sind, aushält;
**dadurch gekennzeichnet, dass**
der Nocken einen Radius aufweist, der größer als der des Zahnrades ist, um so ein Drehmoment, das von dem Zahnrad übertragen wird, zu verstärken.

2. Vorrichtung nach Anspruch 1, wobei das Nockenschlitzteil des Nockens eine Vielzahl von Nockenoberflächen (400b-1, 400b-3, 400b-5) aufweist, bei welchen jede Momentarmlänge von dem Drehgelenk der Nocken schrittweise von einem geöffneten Einlassteil des Nockenschlitzteils hin zu einem geschlossenen inneren Endteil verkürzt wird, um so das Drehmoment zum Verschieben der Last des Hauptkörpers und der Reaktionskraft, die erzeugt wird, wenn der Hauptkörper und das Gestell elektrisch miteinander verbunden sind, zu erzeugen.

3. Vorrichtung nach Anspruch 2, wobei das Nockenschlitzteil des Nockens aufweist:
eine erste Nockenoberfläche (400b-1), die bei dem geöffneten Einlassteil des Nockenschlitzteils positioniert ist und den längsten Momentarm des Drehgelenks des Nockens aufweist;
eine zweite Nockenoberfläche (400b-5), die benachbart zu dem geschlossenen inneren Endteil des Nockenschlitzteils platziert ist und den kürzesten Momentarm des Drehgelenks des Nockens aufweist; und
eine dritte Nockenoberfläche (400b-3), die die erste Nockenoberfläche und die zweite Nockenoberfläche miteinander verbindet und einen Momentarm aufweist, der kürzer ist als der Momentarm der ersten Nockenoberfläche und länger ist als der Momentarm der zweiten Nockenoberfläche.

4. Vorrichtung nach Anspruch 3, wobei ein Winkel zwischen der zweiten Nockenoberfläche und der dritten Nockenoberfläche im Wesentlichen 0° oder 180° beträgt, um so eine Winkelbeschleunigung zu verringern.

5. Vorrichtung nach Anspruch 1, wobei das Zahnrad ein erstes Zahnrad (300a), welches mit dem Zahntrieb in Eingriff gebracht ist, und ein zweites Zahnrad (300b), welches mit dem Zahnteil des Nockens in Eingriff gebracht ist, aufweist.

## Revendications

1. Un appareil d'embrochage-débrochage et un disjoncteur à air libre, le disjoncteur à air libre comprenant un châssis (10) connecté électriquement à une charge électrique et à une source de courant électrique, et un corps principal (20) qui peut être amené dans une position connectée pour être connecté électriquement au châssis, dans une position de test où le corps principal est déconnecté électriquement du châssis, mais où une source de courant de commande est connectée et une entrée/sortie de signal est opérationnelle, et dans une position déconnectée où le corps principal est déconnecté électriquement du châssis, où la source de courant de commande n'est pas active et où l'entrée/sortie de signal n'est pas opérationnelle, l'appareil d'embrochage-débrochage pour un disjoncteur à air libre comprenant:
une broche (S) pourvue d'une portion filetée et pouvant être tournée manuellement en étant reliée à une poignée;
une plaque mobile (MP) engrenée avec la portion filetée de la broche par une vis, de façon à être déplaçable en va-et-vient le long de la portion filetée de la broche tournante;
une crémaillère (R) disposée sur une surface supérieure de la plaque mobile, de façon à être déplaçable en va-et-vient avec la plaque mobile se déplaçant en va-et-vient;
un mécanisme à pignons (300a, 300b) disposé pour s'engrener avec la crémaillère et pouvant tourner en fonction du mouvement de va-et-vient de la crémaillère;
une came (400) pouvant être mise en rotation par une force d'entraînement en rotation transférée depuis le mécanisme à pignons en étant pourvue d'une portion dentée s'engrenant avec le mécanisme à pignons et d'une portion de fente de came (410) pour recevoir une charge du corps principal et une force de réaction générée quand le corps principal et le châssis sont connectés électriquement l'un à l'autre tandis que le corps principal est amené dans une position connectée;
un pivot (C) disposé sur le châssis et supportant en rotation la came (400); et
une portion saillante d'entraînement (B1) s'étendant en saillie depuis le corps principal ou d'un moyen de support du corps principal se déplaçant conjointement avec le corps principal, et coopérant avec la came, de façon à transférer une force d'actionnement de la came au corps principal;
le pivot (C) étant disposé sur le châssis dans une position adjacente au milieu de la hauteur entre des bornes électriques du châssis et donc supportant en rotation la came, de façon que la came reçoive la charge du corps principal et la force de réaction générée quand le corps principal et le châssis sont connectés électriquement l'un à l'autre;
**caractérisé en ce que** la came a un rayon supérieur à ceux du mécanisme à pignons, de façon à amplifier un couple transféré depuis le mécanisme à pignons.

2. L'appareil de la revendication 1, dans lequel la portion de fente de came de la came comprend une pluralité de surfaces de came (400b-1, 400b-3, 400b-5) où chaque longueur de bras de couple du pivot de la came est graduellement raccourcie depuis une portion d'entrée ouverte de la portion de fente de came vers une portion extrême intérieure fermée, de façon à générer le couple pour étager la charge du corps principal et la force de réaction générée quand le corps principal et le châssis sont connectés électriquement l'un à l'autre.

3. L'appareil de la revendication 2, dans lequel la portion de fente de came de la came comprend:
une première surface de came (400b-1) disposée dans la portion d'entrée ouverte de la portion de fente de came et possédant le plus long bras de couple par rapport au pivot de la came;
une deuxième surface de came (400b-5) adjacente à la portion extrême intérieure fermée de la portion de fente de came et possédant le plus court bras de couple par rapport au pivot de la came; et
une troisième surface de came (400b-3) intercalée entre la première surface de came et la deuxième surface de came et possédant un bras de couple plus court que le bras de couple de la première surface de came et plus long que le bras de couple de la deuxième surface de came.

4. L'appareil de la revendication 3, dans lequel un angle entre la deuxième surface de came et la troisième surface de came est sensiblement de 0° ou de 180°, de façon à réduire une accélération angulaire.

5. L'appareil de la revendication 1, dans lequel le mécanisme à pignons comprend un premier mécanisme à pignon (300a) engrené avec la crémaillère et un second mécanisme à pignon (300b) engrené avec des portions dentées de la came.
